Europäisches Patentamt

European Patent Office

Office européen des brevets

(19)

(11) Veröffentlichungsnummer: **0 304 474 B1**

# EUROPÄISCHE PATENTSCHRIFT

(12)

(45) Veröffentlichungstag der Patentschrift:
13.03.91 Patentblatt 91/11

(51) Int. Cl.⁵: **F16F 15/12, F16F 15/16,**
**F16D 13/71**

(21) Anmeldenummer: **88902828.8**

(22) Anmeldetag: **10.03.88**

(86) Internationale Anmeldenummer:
**PCT/EP88/00187**

(87) Internationale Veröffentlichungsnummer:
**WO 88/07147 22.09.88 Gazette 88/21**

(54) ELASTISCHE KUPPLUNG.

(30) Priorität: **14.03.87 DE 3708345**

(43) Veröffentlichungstag der Anmeldung:
**01.03.89 Patentblatt 89/09**

(45) Bekanntmachung des Hinweises auf die
Patenterteilung:
**13.03.91 Patentblatt 91/11**

(84) Benannte Vertragsstaaten:
**AT BE CH DE FR GB IT LI LU NL SE**

(56) Entgegenhaltungen:
**DE-A- 3 329 420**
**DE-B- 1 425 218**
**DE-B- 2 848 748**
**FR-A- 2 540 583**
**FR-A- 2 587 076**

(73) Patentinhaber: **J.M. Voith GmbH**
**Sankt Pöltener Strasse 43**
**W-7920 Heidenheim (DE)**

(72) Erfinder: **HANKE, Wolfgang**
**Berliner Platz 5**
**W-7920 Heidenheim (DE)**

EP 0 304 474 B1

**Beschreibung**

Technisches Gebiet

Die Erfindung betrifft eine elastische Kupplung in Scheibenbauweise, insbesondere geeignet für ein geteiltes Schwungrad für eine Verbrennungskraftmaschine nach dem Oberbegriff des Anspruches 1. Kupplungen dieser Art dienen vor allem als elastisches Bindeglied mit Drehschwingungsdämpfung zwischen Verbrennungskraftmaschinen und nachgeordneten Getrieben. Die scheibenartige Bauweise ermöglicht einen raumsparenden kompakten Anbau des Getriebes an den Motor.

Stand der Technik

Aus der DE-PS 28 48 748 ist bereits eine elastische Kupplung bekannt, die alle Merkmale des ersten Teils des Anspruchs 1 aufweist.

Die bekannte Kupplung weist zwischen den beiden Kupplungshälften mehrere in Umfangsrichtung angeordnete Spiralfedern auf, die in ihrer Wirkung so geschaltet sind, daß sie gleichzeitig belastet sind und eine im wesentlichen lineare Drehmoment-Charakteristik über den Verdrehwinkel aufweisen. Es können stattdessen auch zweierlei Federn eingebaut und so angeordnet sein, daß bei gegenseitiger Verdrehung in einem ersten Winkelbereich zunächst die einen Federn allein das Drehmoment übertragen und ab einem bestimmten Verdrehwinkel die anderen Federn progressiv mitbelastet werden. Diese bekannte Kupplung hat sich bewährt, vor allem beim Antrieb von automatischen Getrieben in Verbindung mit 6 Zylinder-Motoren, insbesondere Dieselmotoren. Vier- und Fünfzylinder-Motoren dagegen weisen für sich allein schon ein wesentlich ungünstigeres Drehschwingungsverhalten auf. Für die Kupplung erschwerend sind ferner Stöße, die z.B. über die Antriebsachsen und/oder das Getriebe beim Anfahren, Schalten und Bremsen durch die Kupplung geleitet werden. Hinzu kommen noch Einflüsse auf das Drehschwingungsverhalten der Antriebsanlage, die von Bauart- und Anordnungsunterschieden der Motoren und Getriebe verschiedener Hersteller herrühren. Diese stark unterschiedlichen Betriebsanforderungen kann die bekannte Kupplung nicht erfüllen.

Darstellung der Erfindung

Es ist Aufgabe der Erfindung, die bekannte Kupplung in ihrer Feder- und Dämpfungscharakteristik so zu verbessern, daß sie für den Antrieb durch Verbrennungsmotoren mit bauartbedingtem ungünstigem Drehschwingungsverhalten geeignet ist.

Diese Aufgabe wird durch die kennzeichnenden Merkmale des Anspruches 1 gelöst. Gegenüber der bekannten Kupplung ist bei der Erfindung mindestens ein weiteres Kupplungsglied an der Drehmomentübertragung zwischen den beiden Kupplungshälften beteiligt. Dieses ist ebenfalls scheibenförmig ausgebildet und mit am Umfang angeordneten fensterförmigen Ausschnitten versehen. Es steht mit beiden Kupplungshälften über elastische Kupplungselemente, vorzugsweise Federn, die in die fensterförmigen Ausschnitte eingesetzt sind, so in Verbindung, daß zwischen dem ersten elastischen Kupplungselement und der Mittelscheibe ein Spiel in Umfangsrichtung besteht, so daß in einem ersten Verdrehwinkelbereich eine Verdrehung der Mittelscheibe gegenüber dem weiteren Kupplungsglied gegen die Kraft des weiteren elastischen Kupplungselementes stattfindet, bis die Mittelscheibe zum Anschlag auf das erste elastische Kupplungselement kommt. Daran anschließend verdrehen sich in einem zweiten Verdrehwinkelbereich die Mittelscheibe und das weitere Kupplungsglied gemeinsam gegenüber der zweiten Kupplungshälfte. Mit dieser Anordnung eines weiteren Kupplungsgliedes zwischen den Seitenscheiben der anderen Kupplungshälfte sind folgende Vorteile verbunden : Der elastische Bereich der Kupplung wird erweitert, so daß für jeden Lastbereich die geeignete Steifigkeit der Kupplung vorliegt. Die erfindungsgemäße Anordnung ergibt eine veränderliche Massenverteilung innerhalb der Kupplung. Die Masse des weiteren Kupplungsgliedes ist nämlich je nach Verdrehwinkel zeitweise der ersten, zeitweise der zweiten Kupplungshälfte zugehörig. Dies ist besonders günstig im Leerlaufzustand des Verbrennungsmotors.

Ein wesentliches Merkmal der Erfindung besteht darin, daß vor allem die Dämpfung bei der Verdrehung der beiden Kupplungshälften verbessert wird. Dazu weist das weitere scheibenförmige Kupplungsglied, welches einen Teil der Begrenzung einer Verdrängungskammer bildet, mindestens eine sich radial erstreckende und in Umfangsrichtung wirksame Fläche auf die der gleichartigen Fläche an der ersten Kupplungshälfte im wesentlichen entspricht und in derselben radialen Lage bezüglich der Verdrängungskammer angeordnet ist. Die Dicke des weiteren Kupplungsgliedes ist zumindest im Bereich der Verdrängungskammer so gewählt, daß diese gemeinsam mit der Dicke der Mittelscheibe im wesentlichen der lichten Weite des Innenraums der zweiten Kupplungshälfte entspricht. Im ersten Drehwinkelbereich (Leerlaufbetrieb) bilden die Teile der Mittelscheibe zusammen mit der Radialfläche an der zweiten Kupplungshälfte eine Verdrängungskammer für eine schwache Dämpfung. Dabei wird die Volumenänderung der Verdrängungskammer durch die Dicke der Teile der Mittelscheibe bestimmt. Im zweiten Drehwinkelbereich (Lastbetrieb) wird die Volumenänderung der Verdrängungskammer durch die relative Bewegung der radialen Fläche der Mittelscheibe gemeinsam mit der radialen Fläche des weiteren Kupplungsgliedes gegenüber der radialen Fläche der zweiten Kupplungshälfte bestimmt, so daß eine starke Dämpfung hervorgerufen wird. Durch das stufenweise Einsetzen der Federwirkung zwischen den beteiligten Kupplungshälften und dem weiteren Kupplungsglied entsteht in den Verdrängungskammern eine veränderliche, der jeweils tragenden Feder angepaßte Dämpfung.

In den Unteransprüchen sind konstruktive Ausführungsbeispiele angegeben. Gemäß Anspruch 2 kann das weitere Kupplungsglied in Form zweier Scheiben ausgebildet sein, die beidseitig der als Mittelscheibe ausgebildeten ersten Kupplungshälfte und innerhalb der Seitenscheiben der zweiten Kupplungshälfte angeordnet sind, wobei die beiden Scheiben des weiteren Kupplungsgliedes mit Hilfe von die Mittelscheibe durchdringenden Verbindungselementen unter sich drehstarr, relativ zur Mittelscheibe und zu den Seitenscheiben jedoch begrenzt drehbar verbunden sind. Diese Ausführungsform eignet sich besonders für Anwendungsfälle, bei denen es schon bei kleinem Verdrehwinkel auf besonders gute Dämpfung ankommt. Dies wird erreicht dadurch, daß jede der Scheiben des weiteren Kupplungsgliedes mit radialen Flächen zur Bildung von Verdrängungskammern versehen ist.

Eine bevorzugte Ausführungsform der Erfindung ist in Anspruch 3 angegeben. Danach ist das weitere Kupplungsglied als Zentralscheibe ausgebildet, und die erste Kupplungshälfte mit der Nabe besteht aus zwei Scheiben, die jeweils zwischen der Zentralscheibe und den Seitenscheiben der zweiten Kupplungshälfte angeordnet sind. Der Vorzug dieser Bauart besteht darin, daß das weitere Kupplungsglied als eine zentrale Scheibe nur eine kleine Masse aufweist, die bei Leerlauf der Antriebsmaschine der zweiten Kupplungshälfte zugehörig ist, während sie bei höherer Drehzahl der ersten Kupplungshälfte mit der Nabe und den zwei Mittelscheiben zugehörig ist.

Die weiteren Unteransprüche betreffen konstruktive Weiterbildungen der Kupplung bezüglich der Anordnung der Federn, der fensterförmigen Ausschnitte hierfür sowie die Dämpfungskammer

## Kurze Beschreibung der Zeichnungen

Die Erfindung wird nachstehend anhand der Zeichnung, die zwei Ausführungsbeispiele zeigt, näher beschrieben. Darin zeigt

Fig. 1 eine Kupplung in einem Schnitt entlang der Linie I der Fig. 2

Fig. 2 einen Schnitt entlang der Linie II der Figur 1

Fig. 3 eine schematische Zylinderschnitt-Darstellung in Ruhestellung

Fig. 4 Darstellung nach Figur 3 nach erster Phase

Fig. 5 Darstellung nach Figur 3 nach zweiter Phase

Fig. 6 Darstellung nach Figur 3 nach dritter Phase

Fig. 7 Schematische Darstellung des Drehmomentverlaufs über dem Verdrehwinkel

Fig. 8 eine Schnittdarstellung in Richtung der Drehachse durch eine Verdrängungskammer in anderer Ausführungsform

Fig. 9 einen Querschnitt durch die Verdrängungskammer nach Fig. 8 entlang der Linie IX.

## Wege zur Ausführung der Erfindung

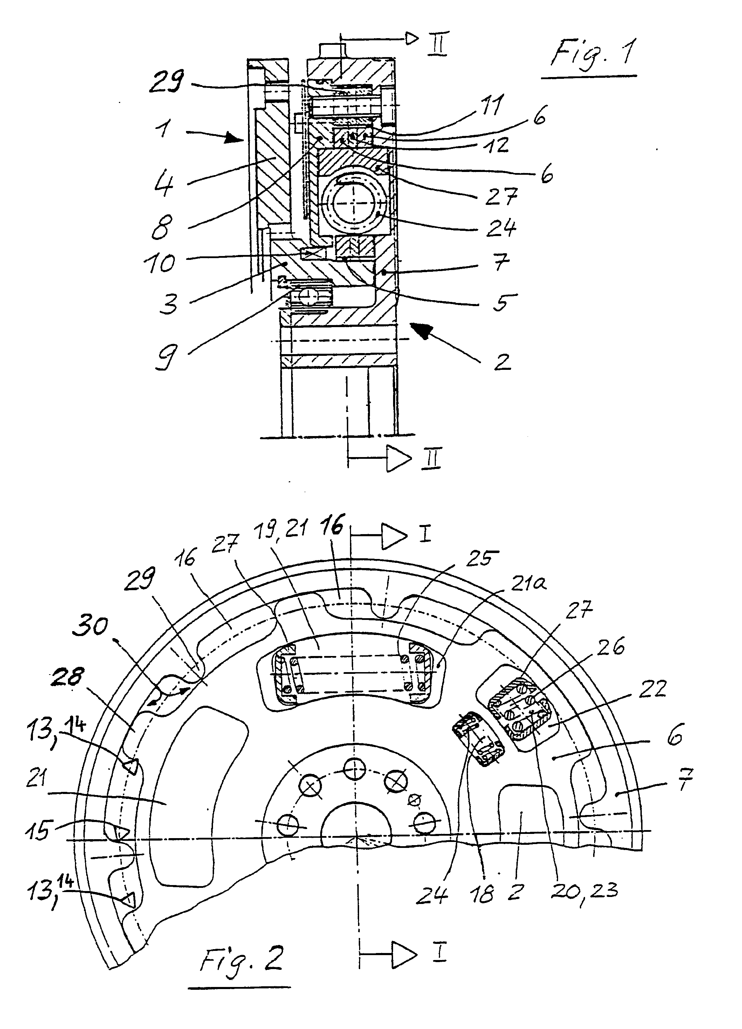

Die in den Figuren 1 und 2 dargestellte Kupplung besteht aus einer ersten Kupplungshälfte 1 und einer zweiten Kupplungshälfte 2. Diese Bezeichnung soll nur der Unterscheidung dienen und ist keine Festlegung der Kraftflußrichtung durch die Kupplung. Die erste Kupplungshälfte 1 umfaßt eine Nabe 3, die mit einem Flansch 4 aufweist zur Verbindung mit einem Getriebe oder einer Trennkupplung (nicht dargestellt). Die Nabe 3 ist ferner mit einer Verzahnung 5 versehen zur Drehverbindung mit zwei Scheiben 6, die die Mittelscheibe der Kupplung darstellen. Die zweite Kupplungshälfte 2 besteht aus zwei Seitenscheiben 7 und 8, die die beiden Mittelscheiben 6 beidseitig einschließen und am Umfang drehstarr miteinander verbunden sind. Die erste Kupplungshälfte 1 ist über ein Lager 9 und eine Dichtung 10 mit der zweiten Kupplungshälfte 2 verbunden, so daß ein mit Dämpfungsmedium füllbarer und dichter Innenraum 11 gebildet ist. Die beiden Mittelscheiben 6 schließen zwischen sich ein weiteres scheibenförmiges Kupplungsglied, die sogenannte Zentralscheibe 12, mit begrenzter Verdrehmöglichkeit ein. Am äußeren Umfang der Mittelscheiben 6 und der Zentralscheibe 12 befinden sich radiale, in Umfangsrichtung wirksame Flächen 13 und 14. Die zweite Kupplungshälfte 2 weist an ihrem dem Innenraum 11 zugewandten Umfang radial nach innen weisende Radialflächen 15 auf, deren Form im wesentlichen derjenigen der radialen Flächen 13 und 14 entspricht. Zwischen den radialen Flächen 13 und 14 und den Radialflächen 15 befinden sich, wie für sich allein bekannt, Verdrängungskammern 16. Die Dicke der beiden Mittelscheiben 6 und der Zentralscheibe 12 ist so gewählt, daß sie, zumindest im Bereich der radialen Flächen der lichten Weite 17 des Innenraums 11 zwischen den Seitenscheiben 7 und 8 entspricht. Eine Dämpfung der relativen Verdrehung der beiden Kupplungshälften kommt wie bekannt dadurch zustande, daß Dämpfungsmedium von der einen in die andere Verdrängungskammer über Drosselspalte 30 radial außerhalb der Flächen 13 und 14 sowie radial innerhalb der Radialflächen 15 gedrückt wird. Die Übertragung des Drehmoments zwischen den beiden Kupplungshälften erfolgt über elastische Kupplungselemente, die wie gebräuchlich als Spiralfedern ausgebildet und in tangentialer Richtung innerhalb der Kupplung wie folgt angeordnet sind : Die Zentralscheibe 12 weist mehrere fensterförmige Ausschnitte 18, 19, 20 auf, die gleichmäßig am Umfang verteilt und jeweils mindestens paarweise vorhanden sind. Im vorliegenden Fall sind zwei Ausschnitte 18 vorhanden, die einander diametral gegenüberliegen und in die jeweils eine erste Feder 24 eingespannt ist. Die Mittelscheiben 6 weisen gleiche Ausschnitte 18 in derselben Lage auf und sind mit der Zentralscheibe 12 über dieselben Federn 24 verbunden. Sowohl die Zentralscheibe 12 als auch die Seitenscheiben 7 und 8 der zweiten Kupplungshälfte 2 weisen ferner Ausschnitte 19 auf, in die jeweils eine zweite Feder 25 eingespannt ist, welche die Zentralscheibe 12 und die zweite Kupplungshälfte 2 verbindet. In weiteren Ausschnitten 20 in der Zentralscheibe 12 ist jeweils eine dritte Feder 26 eingespannt, die in einen entsprechenden Ausschnitt 23 in den Seitenscheiben 7 und 8 eingreift.

Die Federn 24 sind im Durchmesser so bemessen, daß sie etwa der lichten Weite 17 zwischen den Seitenscheiben 7 und 8 entspricht, die Federn 25 und 26 haben jeweils einen Durchmesser, der etwa der Gesamtdicke aller Scheiben entspricht. An beiden Enden aller Federn befinden sich Federtöpfe 27 zum Übertragen der Federkraft auf die betreffenden Scheiben.

Im Bereich der Ausschnitte 19 und 20 in der Zentralscheibe 12 weist die Mittelscheibe Ausschnitte 21 und 22 auf, die beidseitig um ein Maß 21a größer sind als die Ausschnitte 19 und 20. Im Bereich der Ausschnitte 20 in der Zentralscheibe 12 sind die Ausschnitte 23 in den Seitenscheiben 7 und 8 beidseitig um ein. Maß 23a größer als der Ausschnitt 20 in der Zentralscheibe 12. Im vorliegenden Ausführungsbeispiel weist die Kupplung insgesamt vier Federn 25 auf sowie jeweils zwei Federn 24 und 26, die platzsparend auf verschiedenen Durchmessern angeordnet sind.

Die ersten Federn 24 sind für die Übertragung eines vorzugsweise im Leerlauf des Antriebsmotors auftretenden Drehmoments bemessen, das in der Größenordnung von 5 bis 10% des Nenn-Drehmoments liegt. Die zweiten Federn 25 sind ausgelegt zur Drehmomentübertragung bis zur Höhe des Nenn-Moments. Die dritten Federn 26 unterstützen die zweiten Federn 25 bei stoßartiger Überlast bis zu einem eventuellen Anliegen an einem Festanschlag.

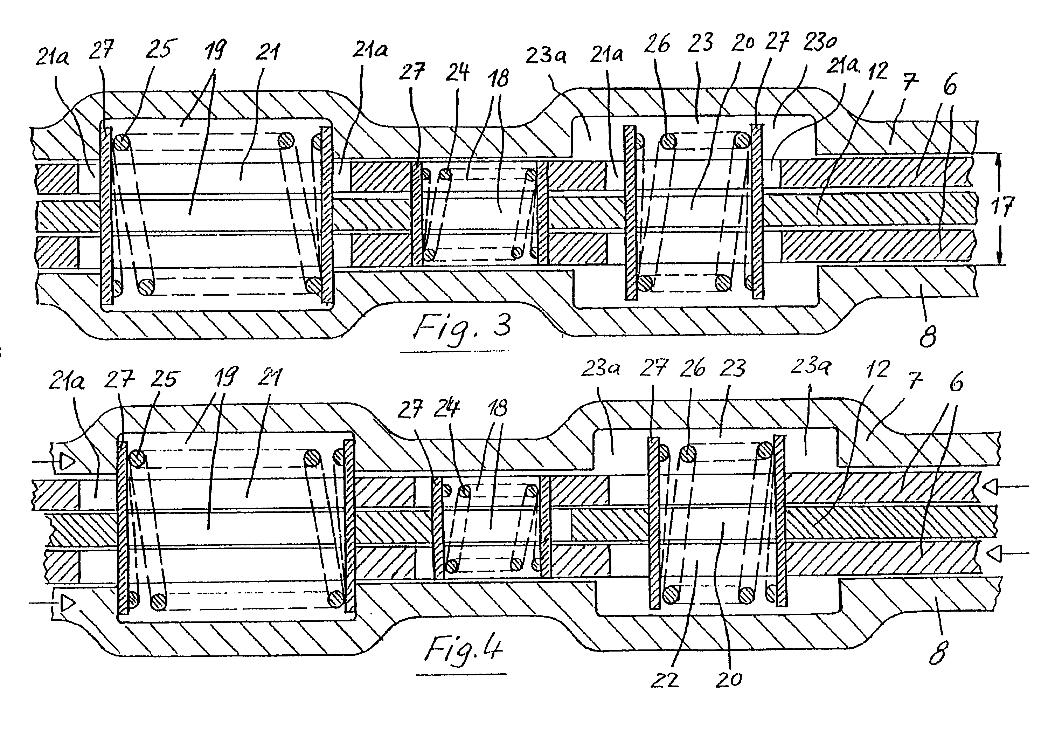

In der Figur 3 ist schematisch in einem Zylinderschnitt die Anordnung der Federn 24, 25, 26 in den Ausschnitten 18 bis 23 innerhalb der Seitenscheiben 7 und 8, der Mittelscheiben 6 und der Zentralscheibe 12 dargestellt, und zwar in Ruhelage der Kupplung, d.h. ohne Übertragung eines Drehmoments. Die erste Feder 24 hält die Zentralscheibe 12 und die Mittelscheiben 6 über deren deckungsgleiche Ausschnitte 18 fest, während die zweite Feder 25 über die deckungsgleichen Ausschnitte 19 die Seitenscheiben 7 und 8 sowie die Zentralscheibe 12 gegenseitig festhält, wobei die zweite Feder 25 durch die Ausschnitte 21 in den Mittelscheiben hindurchgreift. Die Mittelscheiben 6 werden dabei so in Lage gehalten, daß in beiden Drehrichtungen eine Beweglichkeit, nämlich um das erwähnte Maß 21a, das einem bestimmten Verdrehwinkel entspricht, zum Federtopf 27 der zweiten Feder 25 entsteht. Auch beiderseits der Federtöpfe der dritten Feder 26 ist der Abstand 21a im Ausschnitt 22 in den Mittelscheiben 6 gegeben. Somit ist eine eindeutige geometrische Zuordnung der Mittelscheiben zur Zentralscheibe innerhalb der Seitenscheiben 7 und 8 der zweiten Kupplungshälfte 2 hergestellt.

In Figur 4 ist die gegenseitige Lage der Scheiben nach einer ersten Phase a der Verdrehung dargestellt, wobei das Drehmoment über die Seitenscheiben 7 und 8 (Kupplungshälfte 2) eingeleitet und über die Mittelscheiben 6 (Kupplungshälfte 1) weitergeleitet wird. Werden die Federtöpfe 27 mit der zweiten Feder 25 in Pfeilrichtung belastet, so pflanzt sich die Umfangskraft über die Zentralscheibe 12 auf die Federtöpfe 27 der ersten Feder 24 fort. Die erste Feder 24, die, wie beschrieben, der Übertragung von kleinem Drehmoment dient und dementsprechend klein dimensioniert ist, wird zusammengedrückt, während sich das andere Federende an den beiden Mittelscheiben 6 abstützt. Die relative Drehung in dieser ersten Phase a ist beendet, sobald die Mittelscheiben 6 das Maß 21a überwunden haben und an den Federtöpfen 27 der zweiten und dritten Federn 25 und 26 anliegen, wobei sich die Mittelscheiben 6 und die Zentralscheibe 12 wechselweise von den Federtöpfen 27 um den Winkelbetrag a abgehoben haben. Gleichzeitig ist der maximale Hub der ersten Feder 24 erreicht.

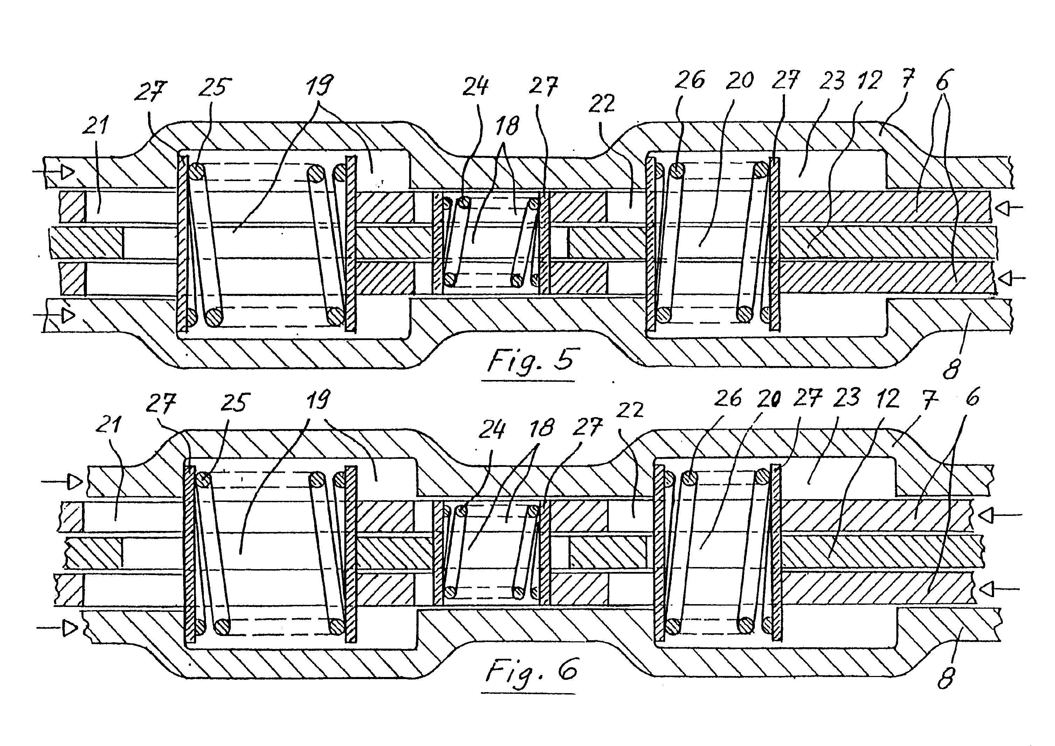

In Figur 5 ist die gegenseitige Lage der Scheiben innerhalb der Kupplung nach der zweiten Phase b der Verdrehung gezeigt. Unter der Einwirkung des Drehmoments über die Seitenscheiben 7 und 8 der zweiten Kupplungshälfte 2 wird nunmehr die zweite Feder 25 zusammengedrückt, wobei die Kraftübertragung direkt über die Federtöpfe von den Seitenscheiben 7 und 8 auf die Mittelscheiben 6 erfolgt. Dabei hebt sich der an den Mittelscheiben 6 angreifende Federtopf 27 von der einen Begrenzungswand des Ausschnittes 19 an den Seitenscheiben 7 und 8 ab. Eine Verdrehung in dieser Phase b ist beendet, sobald sich nach einem Verdrehwinkel b die eine Wandung des Ausschnittes 23 in den Seitenscheiben 7 und 8 an einem Federteller 27 der dritten Feder 26 angelegt hat. In dieser Bewegungsphase hat die erste Feder 24 keinen weiteren Hub erfahren und bleibt unter Vorspannung zwischen den Mittelscheiben 6 und der Zentralscheibe 12 eingespannt. In dieser Phase b ist nur die zweite Feder 25 bis in den Bereich des Nenn-Drehmoments beteiligt.

In der Figur 6 ist die dritte Phase c der Verdrehung dargestellt. Parallel zur Krafteinleitung über die Seitenscheiben 7 und 8 und die zweite Feder 25 auf die Mittelscheiben 6 wird die Umfangskraft ferner über die Begrenzungswand des Ausschnittes 23 in den Seitenscheiben 7 und 8 über die dritte Feder 26 auf die Mittelscheiben 6 übertragen, wobei die Zentralscheibe 12 sich auf der einen unbelasteten Seite des Ausschnittes 20 vom Federteller 27 der dritten Feder 26 um den den Verdrehwinkel c entsprechenden Betrag abhebt. Dadurch tritt ein progressives Mittragen der dritten Feder 26 insbesondere bei einem Drehmoment ein, das das Nenn-Drehmoment stoßartig übersteigt. Die erste Feder 24 bleibt dabei wie in der vorausgehenden Phase b unter Vorspannung zwischen den Mittelscheiben und der Zentralscheibe eingespannt. Die Phase c endet, wie für sich allein bekannt, mit einem eine weitere Verdrehung hemmenden Festanschlag.

Da, wie beschrieben, in der ersten Drehwinkel-Phase a nur eine Verdrehung der Mittelscheiben 6 gegenüber den Seitenscheiben 7 und 8 eintritt, wobei die Zentralscheibe 12 noch den Bewegungszustand der Seitenscheiben beibehält, sind an einer Dämpfung der Bewegungsausschläge nur die radialen Flächen 14 der Mittelscheiben 6 beteiligt. Der Übertragung des dabei niedrigen Drehmoments (nur über die ersten Federn 24) ist somit auch nur eine reduzierte Dämpfung in den Verdrängungskammern 16 zugeordnet. Ab der Drehwinkel-Phase b hingegen ist, wie beschrieben, die Zentralscheibe 12 bezüglich ihrer relativen Bewegung den Mittelscheiben 6 zugeordnet. Folglich nehmen bei höheren Drehmoment auch die radialen Flächen 13 der Zentralscheibe 12 an einer dadurch gesteigerten Dämpfung in den Verdrängungskammern 16 teil.

Von besonderem Vorteil ist bei der erfindungsgemäßen Kupplung der Umstand., daß in der ersten Drehwinkel-Phase a die Zentralscheibe 12 über die zweite Feder 25 der Masse der zweiten Kupplungshälfte 2 mit den beiden Seitenscheiben 7 und 8 zugehörig ist. Im beschriebenen Ausführungsbeispiel ist die erste Kupplungshälfte 1 z.B. einem Getriebe zugeordnet, die zweite Kupplungshälfte 2 dagegen am Schwungrad des Motors befestigt. Dadurch ist für den Leerlaufbetrieb der Antriebsmaschine eine erhöhte Schwungmasse wirksam, die dem Antriebsaggregat im Leerlaufbetrieb, insbesondere bei niedrigen Drehzahlen, eine verbesserte Laufruhe verleiht. Bei höherem Drehmoment ist, wie beschrieben, die erste Feder 24 vorgespannt und demzufolge bezüglich der Drehschwingungen Bestandteil der Mittelscheiben 6 und ist ferner der Masse der ersten Kupplungshälfte 1 mit der Nabe zuzuordnen. Dies ist wiederum von Vorteil für den Betrieb in der Drehwinkel-Phase b und c.

Es ist in Abwandlung der beschriebenen Ausführungsform noch möglich, die Maße 21a und 23a in den Mittelscheiben und Seitenscheiben beidseitig der ersten und zweiten Federn 25 und 26 ungleich auszuführen. Es kann insbesondere vorteilhaft sein, in der der Antriebsdrehrichtung entgegengesetzten Schubrichtung die Maße 21a und 23a kleiner auszuführen, wodurch die Kupplung in beiden Drehrichtungen unterschiedliche Kennlinien erhält. Dies kann schwingungstechnisch von Vorteil sein und erlaubt es ferner, den zur Verfügung stehenden Bauraum innerhalb der Kupplung besser zu nützen.

Ergänzend ist noch zu erwähnen, daß in der ersten Drehwinkel-Phase a eine Serienanordnung der ersten und zweiten Feder 24 und 25 vorliegt, die zum Zusammendrücken der ersten Feder 24 führt. Gleichzeitig aber wird auch die zweite Feder 25 unter der Wirkung derselben Kraft zusammengedrückt. Da die erste Feder 24 jedoch sehr schwach dimensioniert ist und nur zweifach in der Kupplung vorliegt, während insgesamt vier Federn 25 vorgesehen sind, ist der Hub der zweiten Federn 25 in der Drehwinkel-Phase a praktisch zu vernachlässigen und wurde daher bei der Beschreibung des Funktionsablaufs nicht weiter berücksichtigt.

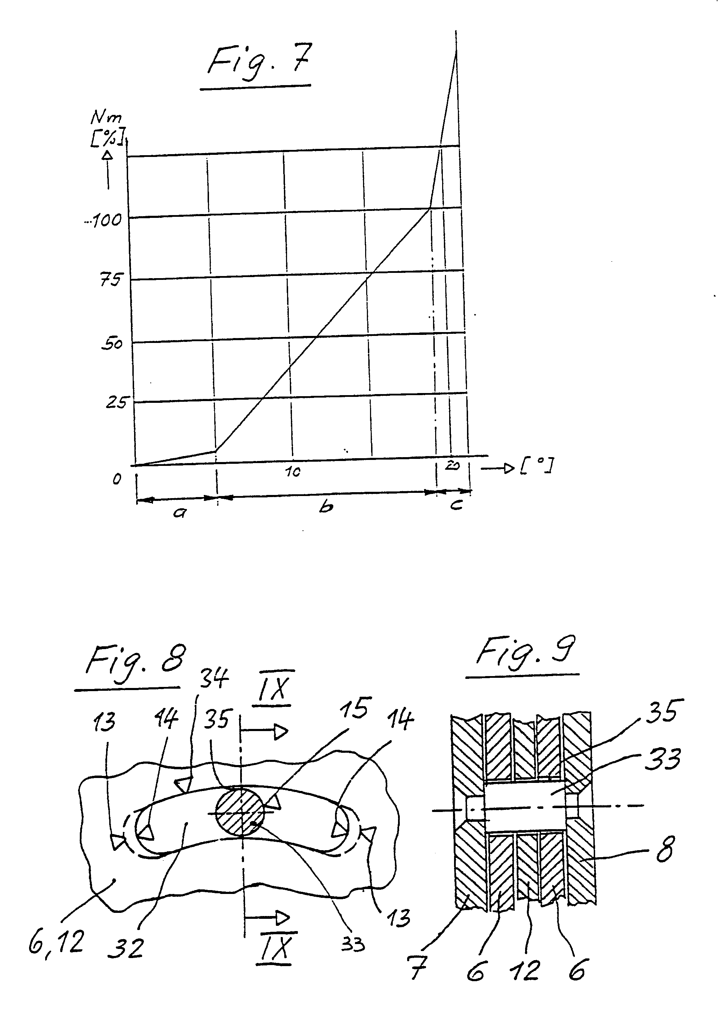

In der Figur 7 ist schematisch der Kennlinienverlauf der Kupplung dargestellt, nämlich das Drehmoment als Ordinate über dem Verdrehwinkel als Abszisse. In der Drehwinkel-Phase a ist nur die erste Feder 24 wirksam, nämlich bis zu einem Verdrehwinkel von etwa 5° und einem Drehmoment, das zwischen 5 und 10% des Nenndrehmoments entspricht. In der Drehwinkel-Phase b sind nur die zweiten Federn 25 beteiligt bis zu einem Drehwinkel in der Größenordnung von 19°, bei dem das Nenndrehmoment erreicht ist. Daran schließt sich die Drehwinkel-Phase c an, die einer Überlast entspricht und nur noch einer Verdrehung von ca. 2° entspricht, wobei zusätzlich zu den zweiten Federn 25 noch die Federn 26 belastet sind. Durch diese Anordnung von Federn innerhalb einer Kupplung, verbunden mit einer gestaffelten hydraulischen Dämpfung, ist eine Kupplung geschaffen, die auch für Antriebsmaschinen mit ungünstigem Drehschwingungsverhalten bei tiefen Drehzahlen und Teillastbetrieb ein befriedigendes Drehschwingungsverhalten gewährleistet.

In der Fig. 2 ist eine Verdrängungskammer 16 dargestellt, bei der die radialen Flächen 13, 14, 15 gleichzeitig als Festanschläge zur Begrenzung des Verdrehwinkels ausgebildet sind. Dazu sind die Flächen 13, 14 an den Mittelscheiben und an der Zentralscheibe als breite Ansätze 28 ausgebildet, die bei maximaler Verdrehung mit gleichartigen Ansätzen 29 an der zweiten Kupplungshälfte in Kontakt kommen. Jeweils zwischen den Ansätzen 28 bzw. 29 und der entsprechenden Gegenfläche befinden sich die für die Dämpfung maßgebenden Drosselspalte 30.

Eine andere Ausführungsform einer Verdrängungskammer ist in Fig. 8 dargestellt. Dort sind die Mittelscheiben 6 und die Zentralscheibe 12 mit in Umfangsrichtung gebogenen Öffnungen 32 versehen, die die Verdrängungskammer bilden, wobei die radiale Erstreckung der Öffnungen 32 denen der radialen Flächen 13 bzw. 14 entspricht. Durch die Öffnungen hindurch erstreckt sich ein Bauteil 33, z.B. ein die beiden Seitenscheiben 7, 8 verbindender Niet, mit Radialflächen 15. Zwischen dem Niet 33 und den äußeren gebogenen Begrenzungsflächen 34 befindet sich ein Drosselpalt 35. Durch geeignete, über den Verdrehwinkel variable Krümmung der Wandflächen 34 kann der Drosselspalt 35 und damit die Dämpfung beeinflußt werden.

Die Fig. 9 zeigt einen Schnitt durch die Verdrängungskammer nach Fig. 8 entlang der Schnittlinie IX. Zu erkennen ist vor allem der die Öffnungen 32 in den Mittelscheiben 6 und der Zentralscheibe 12 durchdringende Niet, dessen Befestigung an den Seitenscheiben 7, 8 sowie die Drosselspalte 35.

Auch bei dieser Ausführungsform können die radialen Flächen 13, 14, 15 als Festanschlag zwischen den beiden Kupplungshälften 1, 2 ausgebildet sein. Stattdessen aber kann ein Festanschlag auch außerhalb des mit flüssigem Medium gefüllten Innenraumes 11 angebracht sein, also an gänzlich anderer Stelle der Kupplung.

**Ansprüche**

1. Elastische Kupplung in Scheibenbauweise, insbesondere für ein geteiltes Schwungrad für eine Verbrennungskraftmaschine, mit den folgenden Merkmalen

a) eine erste Kupplungshälfte (1) ist durch eine mittlere, mit einer Nabe (3) drehfest verbundene Mittelscheibe (6) gebildet ;

b) eine zweite Kupplungshälfte (2) besteht aus zwei untereinander drehstarr verbundenen zu beiden Seiten der Mittelscheibe (6) angeordneten und diese am Außenumfang umhüllenden Seitenscheiben (7, 8), die gegenüber der Mittelscheibe (6) begrenzt verdrehbar sind ;

c) beide Kupplungshälften (1, 2) sind über elastische Kupplungselemente (25, 26) verbunden, die in mehrere am Umfang verteilte Ausschnitte (18, 21, 22) in der Mittelscheibe (6) und entsprechende Ausnehmungen (19, 23) in den Seitenscheiben (7, 8) eingreifen ;

d) die Seitenscheiben (7, 8) begrenzen einen die Mittelscheibe (6) aufnehmenden flüssigkeitsdichten Innenraum (11), der mit einem Dämpfungsmedium gefüllt ist ;

e) im radial äußeren Bereich des zwischen den Seitenscheiben (7, 8) befindlichen Innenraums befindet sich wenigstens eine teilweise durch sich radial erstrekkende Flächen (13, 15) der Mittelscheibe (6) und der zweiten Kupplungshälf (2) gebildete, beim gegenseitigen Verdrehen der Kupplungshälften im Volumen veränderliche, mit dem Dämpfungsmedium füllbare und eine Drosselöffnung aufweisende Verdrängungskammer (16) ; gekennzeichnet durch die folgenden Merkmale :

f) im Innenraum (11) der zweiten Kupplungshälfte (2) ist mindestens ein weiteres scheibenförmiges Kupplungsglied (12) verdrehbar gegenüber den Seitenscheiben (7, 8) und der Mittelscheibe (6) angeordnet, das mit am Umfang verteilten fensterförmigen Ausschnitten (18, 19, 20) versehen ist und über mindestens ein weiteres elastisches Kupplungselement (24) mit der ersten Kupplungshälfte (1) und über mindestens eines der ersten elastischen Kupplungselemente (25, 26) mit der zweiten Kupplungshälfte (2) in Verbindung steht, wobei zwischen diesem ersten elastischen Kupplungselement (25, 26) und der Mittelscheibe (6) ein umfangmäßiges Spiel besteht, so daß in einem ersten Verdrehwinkelbereich (a) eine Verdrehung der Mittelscheibe (6) gegenüber dem weiteren Kupplungsglied (12) gegen die Kraft des weiteren elastischen Kupplungselements (24) stattfindet, bis die Mittelscheibe (6) zum Anschlag auf das erste elastische Kupplungelement (25, 26) kommt, wonach sich in einem zweiten Verdrehwinkelbereich (b) die Mittelscheibe (6) und das weitere Kupplungsglied (12) gemeinsam gegenüber der zweiten Kupplungshälfte (2) verdrehen ;

g) das weitere Kupplungsglied (12) bildet einen Teil der Begrenzung der genannten Verdrängungskammer (16), weist hierzu mindestens eine sich radial erstreckende und in Umfangsrichtung wirksame Fläche (13) auf, die der gleichartigen Fläche (14) der ersten Kupplungshälfte (1) im wesentlichen entspricht und in derselben radialen Lage bezüglich der Verdrängungskammer (16) angeordnet ist ;

h) die Dicke des weiteren Kupplungsgliedes (12) ist zumindest im Bereich der Verdrängungskammer (16) so gewählt, daß diese gemeinsam mit der Dicke der Mittelscheibe (6) im wesentlichen der lichten Weite (17) des Innenraumes (11) entspricht, so daß in dem ersten Verdrehwinkelbereich (a) die Volumenveränderung der Verdrängungskammer (16) durch die relative Bewegung der jeweiligen radialen Flächen (13, 15) der Mittelscheibe (6) und der zweiten Kupplungshälfte 2, um eine schwache Dämpfung hervorzurufen, bestimmt wird, und daß in dem zweiten Verdrehwinkelbereich (b) die Volumenveränderung der Verdrängungskammer (16) durch die relative Bewegung der radialen Fläche (13) der Mittelscheibe (6) gemeinsam mit der radialen Fläche (14) des weiteren Kupplungsgliedes (12) gegenüber der radialen Fläche (15) der zweiten Kupplungshälfte (2) bestimmt wird, um eine starke Dämpfung hervorzurufen.

2. Elastische Kupplung nach Anspruch 1, dadurch gekennzeichnet, daß das weitere Kupplungsglied (12) als zwei Scheiben ausgebildet ist, die beidseitig der Mittelscheibe (6) innerhalb der Seitenscheiben (7, 8) der zweiten Kupplungshälfte (2) angeordnet und mit Hilfe von die Mittelscheibe (6) durchdringenden Verbindungselementen drehstarr und gegenüber der Mittelscheibe (6) begrenzt drehbar verbunden sind.

3. Elastische Kupplung nach Anspruch 1, dadurch gekennzeichnet, daß die auf der Nabe (3) befestigte Mittelscheibe (6) aus zwei Teilen besteht und daß das weitere Kupplungsglied (12) als eine Zentralscheibe (12) begrenzt verdrehbar zwischen den beiden Teilen der Mittelscheibe angeordnet ist.

4. Elastische Kupplung nach Anspruch 3, dadurch gekennzeichnet, daß die beiden Kupplungshälften (1, 2) und die Zentralscheibe (12) über mindestens drei Federn (24, 25, 26) untereinander in Verbindung stehen, von denen jede mindestens zweifach, am Umfang verteilt, vorhanden ist.

5. Elastische Kupplung nach Anspruch 4, dadurch gekennzeichnet, daß die Drehmomentübertragung zwischen den beiden Kupplungshälften (1, 2) in einem ersten, im wesentlichen der Motorleerlaufdrehzahl entsprechenden niedrigen Drehmoment- und Verdrehwinkelbereich (a) über eine erste Feder (24) erfolgt, deren Wirkung in einem zweiten dem Haupt-Drehmoment- und Verdrehwinkelbereich (b) oberhalb der Motorleerlaufdrehzahl von einer stärkeren zweiten Feder (25) abgelöst wird und daß in einem dritten Drehmoment- und Verdrehwinkelbereich (c), der im wesentlichen einer das Nenn-Drehmoment übersteigenden Überlast entspricht, eine dritte Feder (26) überlagernd zugeschaltet ist.

6. Elastische Kupplung nach Anspruch 5, dadurch gekennzeichnet, daß die erste Feder (24) zwischen gleich großen fensterförmigen Ausschnitten (18) in der Zentralscheibe (12) und den beiden Teilen der Mittelscheibe (6), die zweite Feder (25) zwischen gleich großen fensterförmigen Ausschnitten (19) in der Zentralscheibe (12) und den Seitenscheiben (7, 8) der zweiten Kupplungshälfte (2), und die dritte Feder (26) in einem fensterförmigen Ausschnitt (20) in der Zentralscheibe (12) eingespannt sind, daß die beiden Teile der Mittelscheibe (6) im Bereich der zweiten und dritten Feder (25, 26), die zwischen der Zentralscheibe (12) und den Seitenscheiben (7, 8) der zweiten Kupplungshälfte (2) eingespannt sind, fensterförmige Ausschnitte (21, 22) aufweisen, die um einen dem Verdrehwinkelbereich (a) der ersten Feder (24) entsprechenden Betrag größer sind als die fensterförmigen Ausschnitte (19, 20) für die zweite und dritte Feder (24, 25) in der Zentralscheibe (12), und daß die Seitenscheiben (7, 8) der zweiten Kupplungshälfte (2) im Bereich der in der Zentralscheibe (12) eingespannten dritten Feder (26) fensterförmige Ausschnitte (23) aufweisen, die um einen dem Verdrehwinkelbereich (b) der zweiten Feder (25) entsprechenden Betrag größer sind als der fensterförmige Ausschnitt (20) für die dritte Feder (26) in der Zentralscheibe (12).

7. Elastische Kupplung nach Anspruch 6, dadurch gekennzeichnet, daß die Breite der ersten Feder (24) im wesentlichen der lichten Weite (17) des Innenraumes (11) in der zweiten Kupplungshälfte (2) entspricht.

8. Elastische Kupplung nach Anspruch 5, dadurch gekennzeichnet, daß der Wirkungsbereich der ersten Federn (24) zwischen 0 bis 8°, vorzugsweise 5°, beträgt, der Drehwinkelbereich der zweiten Feder (25) bis zu einem Verdrehwinkel von 22°, vorzugsweise 19°, reicht, dem sich der Drehwinkelbereich der dritten Feder (26) bis vorzugsweise 21° anschließt, dem bei weiterer Verdrehung ein Festanschlag.

9. Elastische Kupplung nach einem der Ansprüche 1 bis 8, dadurch gekennzeichnet, daß im radial äußeren Bereich des Innenraumes (11) an der ersten Kupplungshälfte (1) wenigstens ein Ansatz (28) angeordnet ist, der bei maximalem Verdrehwinkel mit einem an der zweiten Kupplungshälfte (2) vorgesehenen Ansatz (29) einen Festanschlag bildet.

10. Elastische Kupplung nach einem der Ansprüche 1 bis 8, gekennzeichnet durch eine Verdrängungskammer, die durch gekrümmte Öffnungen (32) in den Mittelscheiben (6) und der Zentralscheibe (12) gebildet ist, sowie einem die Öffnungen (32) durchdringenden Bauteil (33), wobei die radiale Erstreckung des Bauteils (33) so gewählt ist, daß zwischen den sich in Umfangsrichtung erstreckenden Wandflächen (34) der Öffnungen (32) und dem Bauteil (33) Drosselspalte (35) gebildet sind.

11. Elastische Kupplung nach Anspruch 10, dadurch gekennzeichnet, daß die Krümmung der Wandflächen (34) zum Zwecke variabler Drosselspalte (35) nicht konstant ist.

## Claims

1. Elastic coupling in the form of a plate assembly, in particular for a split flywheel for a combustion engine, with the following features :

a) a first coupling half (1) is formed by a middle plate (6), connected to be rotatably secure to a hub (3) ;

b) a second coupling half (2) consists of two lateral plates (7, 8), connected to one another to be rotatably secure, arranged at both sides of the middle plate (6) and encasing same at the outer periphery, which are rotatable to a limited extent relative to the middle plate (6) ;

c) both coupling halves (1, 2) are connected via elastic clutch elements (25, 26), engaging into several cut-outs (18, 21, 22) placed along the periphery of the middle plate (6) and respective recesses (19, 23) in the lateral plates (7, 8) ;

d) the lateral plates (7, 8) define a liquidtight interior space (11), which accommodates the middle plate (6) and is filled with a damping medium ;

e) in the radial outer region of the interior space between the lateral plates (7, 8), is located at least one displacement chamber, composed partially by radially extending surfaces (13, 15) of the middle plate (6) and the second clutch half (2), with the volume being changeable during torsioning of the clutch halves, loadable with the damping medium and comprising a restrictor opening ;

**characterised by the following features :**

f) in the interior space (11) of the second coupling half (2) is at least one further plate-shaped coupling member (12), arranged to be rotatable relative to the lateral plates (7, 8) and the middle plate (6), which member is provided with window-like cut-outs (18, 19, 20) spaced around the periphery, and which is connected, via at least one further elastic coupling element (24), to the first coupling half (1), and via at least one of the first elastic coupling elements (25, 26) to the second coupling half (2), in which respect there exists a peripheral play between this first elastic coupling element (25, 26) and the middle plate (6), so that in a first torsion-angle range (a) torsioning the middle plate (6) relative to the further clutch member (12) against the force of a further elastic coupling element (24) takes place until the middle plate (6) abuts against the first elastic coupling element (25, 26), whereafter in a second torsionangle range (b) the middle plate (6) and the further coupling member (12) torsion together relative to the second coupling half (2) ;

g) the further coupling member (12) is part of a limitation of the aforesaid displacement chamber (16), and for this purpose has at least one radially extending and peripherally effective surface (13), which substantially corresponds with the likewise surface (14) of the first coupling half (1) and is arranged in the same radial position relative to the displacement chamber (16).

h) the thickness of the further coupling member (12) is chosen, at least in the region of the displacement chamber (16), to substantially correspond together with the thickness of the middle plate (6) with the clearance (17) of the interior space (11), so that in the first torsion-angle range (a) the change in volume of the first displacement chamber (16) is determined by the relative movement of the respective radial surfaces (13, 15) of the middle plate (6) and of the second coupling half 2, in order to cause weak damping, and that in the second torsion-angle range (b) the change in volume of the displacement chamber (16) is determined by the relative movement of the radial surface (13) of the middle plate (6) and of the radial surface (14) of the further coupling member (12) relative to the radial surface (15) of the second coupling half (2), in order to cause severe damping.

2. Elastic coupling according to claim 1, **characterised in that** the further coupling member (12) is arranged to be two plates, arranged on both sides of the middle plate (6) within the lateral plates (7, 8) of the second coupling half (2) and connected, by way of connecting elements, which pass through the middle plate (6), to be rotatably secure and of limited turning capability relative to the middle plate (6).

3. Elastic coupling according to claim 1, **characterised in that** the middle plate (6), mounted on the hub (3), consists of two parts, and that the further coupling member (12) is arranged as a central plate (12), which is of limited torsioning capability, between the two parts of the middle plate.

4. Elastic coupling according to claim 3, **characterised in that** the two coupling halves (1, 2) and the central plate (12) are connected to one another by at least three springs (24, 25, 26), of which there are at least two each placed around the periphery.

5. Elastic coupling according to claim 4, **characterised in that** the torque transfer between the two coupling halves (1, 2) takes place in a first slow torque- and torsion-angle range (a), which substantially equals the idling speed of the engine, via a first spring (24), the effect of which is replaced by a second of the torque- and torsion-angle range (b) above the engine idling speed by a stronger second spring (25), and that in a third torque- and torsion-angle range (c), which substantially equals an overload above the nominal torque, a third spring (26) is added to be superposed.

6. Elastic coupling according to claim 5, **characterised in that** the first spring (24) is tensioned between window-shaped cut-outs (18) of equal size in the central plate (12) and the two sections of the middle plate (6), the second spring (25) is tensioned between window-shaped cut-outs (19) of equal size in the central plate (12) and the lateral plates (7, 8) of the second coupling half (2), and the third spring (26) is tensioned in a window-shaped cut-out (20) in the central plate (12), that the two sections of the middle plate (6) have, in the region of the second and third spring (25, 26), which are tensioned between the central plate (12) and the lateral plates (7, 8) of the second coupling half (2), window-shaped cut-outs (21, 22), which are larger by an amount corresponding with that of the torque-angle range (a) of the first spring (24) than the window-shaped cut-outs (19, 20) for the second and third spring (24, 25) in the central plate (12), and that the lateral plates (7, 8) of the second coupling half (2) in the region of the third spring (26), which is tensioned in the central plate (12), have window-shaped cut-outs (23), which are larger by an amount corresponding with the torque-angle range (b) of the second spring (25) than the window-shaped cut-out (20) for the third spring (26) in the central plate (12).

7. Elastic coupling according to claim 6, **characterised in that** the breadth of the first spring (24) substantially corresponds with the clearance (17) of the interior space (11) in the second coupling half (2).

8. Elastic coupling according to claim. 5, **characterised in that** the effective range of the first spring (24) lies between 0 to 8°, preferably 5°, the torque-angle range of the second spring (25) extends to a torque angle of 22°, preferably 19°, followed by the torque-angle range of the third spring (26) up to preferably 21°, followed by a stop in the event of further turning.

9. Elastic coupling according to one of the claims 1 to 8, **characterised in that** at least one protrusion (28) is attached to the first coupling half (1) in the radial outer region of the interior space (11), which protrusion together with a protrusion (29) provided on the second coupling half (2) forms a stop at the maximum torsion angle.

10. Elastic coupling according to one of the claims 1 to 8, **characterised by** a displacement chamber, formed by curved openings (32) in the middle plates (6) and the central plate (12), and by a construction component (33) which passes through the openings (32), in which respect the radial extension of the construction component (33) is chosen such that a restrictor gap (35) is formed between the peripherally extending lateral surfaces (34) of the openings (32) and the construction component (33).

11. Elastic coupling according to claim 10, **characterised in that** the curvature of the lateral surfaces (34) serving the variable restrictor gaps (35) is not constant.

## Revendications

1. Accouplement élastique à disques, notamment pour un volant séparé d'un moteur à combustion interne, avec les particularités suivantes :

a) une première moitié d'accouplement (1) est constituée par un disque médian (6) solidaire en rotation d'un moyeu (3),

b) une deuxième moitié d'accouplement (2) est constituée par deux disques latéraux (7, 8) solidaires en rotation l'un de l'autre, et disposés des deux côtés du disque médian (6) et qui enveloppent celui-ci à leur périphérie externe, ces disques latéraux étant susceptibles de tourner d'une façon limitée par rapport au disque médian (6),

c) les deux moitiés (1, 2) de l'accouplement sont reliées par l'intermédiaire d'éléments élastiques d'accouplement (25, 26) qui viennent en prise dans plusieurs découpures (18, 21, 22) réparties sur la périphérie dans le disque médian (6) et dans des évidements correspondants (19, 23) dans les disques latéraux (7, 85),

d) les disques latéraux (7, 8) délimitent un espace interne (11) étanche aux liquides dans lequel est logé le disque médian (6) et qui est rempli par un fluide d'amortissement,

e) dans la zone externe radiale, de l'espace interne se trouvant entre les disques latéraux (7, 8) se trouve au moins une chambre de refoulement constituée partiellement par des surfaces s'étendant radialement (13, 15) du disque médian (6) et de la seconde moitié d'accouplement (2), cette chambre dont le volume varie lors d'une rotation réciproque des moitiés de l'accouplement, étant susceptible d'être remplie par le fluide d'amortissement et comportant une ouverture d'étranglement, accouplement élastique caractérisé en ce que :

f) dans l'espace interne (11) de la seconde moitié (2) de l'accouplement, est disposé au moins un autre organe d'accouplement en forme de disque (12) susceptible de tourner par rapport aux disques latéraux (7, 8) et par rapport au disque médian (6), cet organe d'accouplement étant muni de découpures en forme de fenêtres (18, 19, 20) réparties à la périphérie et étant en liaison, par l'intermédiaire d'au moins un autre élément élastique d'accouplement (24) avec la première moitié (1) de l'accouplement et par l'intermédiaire d'au moins un des premiers éléments élastiques d'accouplement (25, 26) avec la seconde moitié (2) de l'accouplement, cependant qu'entre ce premier élément élastique d'accouplement (25, 26) et le disque médian (6) subsiste un jeu périphérique, de sorte que dans une première zone (a) de l'angle de rotation, une rotation du disque médian (6) par rapport à cet autre organe d'accouplement (12) a lieu contre l'action de l'autre élément élastique d'accouplement (24) jusqu'à ce que le disque médian (6) vienne en butée sur le premier élément élastique d'accouplement (25, 26) après quoi, dans une seconde zone (b) de l'angle de rotation, le disque médian (6) et l'autre organe d'accouplement (12) tournent conjointement par rapport à la seconde moitié (2) de l'accouplement,

g) l'autre organe d'accouplement (12) constitue une partie de la délimitation de la chambre de refoulement précitée (16) et comporte, à cet effet, au moins une surface (13) s'étendant radialement et agissant en direction périphérique qui correspond pour l'essentiel à la surface de même type (14) de la première moitié (1) de l'accouplement et qui est dans la même position radiale par rapport à la chambre de refoulement (16),

h) l'épaisseur de l'autre organe d'accouplement (12), tout au moins dans la zone de chambre de refoulement (16) est choisie de façon que cette épaisseur, conjointement avec l'épaisseur du disque médian (6) corresponde essentiellement à la largeur libre (17) de l'espace interne (11), de sorte que dans la première zone (a) de l'angle de rotation, la variation de volume de la chambre de refoulement (16) est déterminée par le déplacement relatif des surfaces radiales respectives (13, 15) du disque médian (6) et de la seconde moitié (2) de l'accouplement, pour provoquer un faible amortissement, et que dans la deuxième zone (b) de l'angle de rotation, la variation de volume de la chambre de refoulement (16) est déterminée par le déplacement relatif de la surface radiale (13) du disque médian (6) conjointement avec la surface radiale (14) de l'autre organe d'accouplement (12) par rapport à la surface radiale (15) de la seconde moitié (2) de l'accouplement, pour provoquer un amortissement énergique.

2. Accouplement élastique selon la revendication 1, caractérisé en ce que l'autre organe d'accouplement (12) est constitué sous la forme de deux disques qui sont disposés des deux côtés du disque médian (6) à l'intérieur des disques latéraux (7, 8) de la seconde moitié (2) de l'accouplement et qui sont rendus solidaires en rotation à l'aide d'éléments de liaison traversant le disque médian (6) et sont susceptibles de tourner, de façon limitée, par rapport au disque médian (6).

3. Accouplement élastique selon la revendication 1 caractérisé en ce que le disque médian (6) fixé sur le moyeu (3) est constitué de deux parties et que l'autre organe d'accouplement (12) est réalisé sous la forme d'un disque central (12) susceptible de tourner de façon limitée entre les deux parties du disque médian.

4. Accouplement élastique selon la revendication 3, caractérisé en ce que les deux moitiés (1, 2) de l'accouplement et le disque central (12) sont reliés entre eux par l'intermédiaire d'au moins trois ressorts (24, 25, 26) dont chacun est prévu en au moins deux exemplaires répartis à la périphérie.

5. Accouplement élastique selon la revendication 4, caractérisé en ce que la transmission du couple entre les deux moitiés (1, 2) de l'accouplement dans une première zone (a) de l'angle de rotation, et pour un couple réduit correspondant essentiellement à la vitesse de rotation en marche à vide du moteur, s'effectue par l'intermédiaire d'un premier ressort (24), dont l'action est supplantée dans une deuxième zone (b) de l'angle de rotation, pour un couple plus important correspondant à une vitesse de rotation supérieure à celle du ralenti du moteur, par un second ressort plus énergique (25), et que dans une troisième zone (c) de l'angle de rotation, correspondant essentiellement à une surcharge dépassant le couple nominal, l'action d'un troisième ressort (26) vient se superposer.

6. Accouplement élastique selon la revendication 5, caractérisé en ce que le premier ressort (24) est encastré entre deux découpures en forme de fenêtres de mêmes dimensions (18) dans le disque central (12) et dans les deux parties du disque médian (6), le second ressort (25) est encastré entre deux découpures en forme de fenêtres de mêmes dimensions (19) dans le disque central (12) et les disques latéraux (7, 8) de la seconde moitié (2) de l'accouplement, et le troisième ressort (26) est encastré dans une découpure en forme de fenêtre (20) dans le disque central (12), les deux parties du disque médian (6) comportant dans la zone des deuxième et troisième ressorts (25, 26) qui sont encastrés entre le disque central (12) et les disques latéraux (7, 8) de la seconde moitié (2) de l'accouplement, des découpures en forme de fenêtres (21, 22) qui sont plus grandes d'une quantité correspondant à la zone (a) d'angle de rotation du premier ressort (24) que les découpures en forme de fenêtres (19, 20) pour les second et troisième ressorts (24, 25) dans le disque central (12), et les disques latéraux (7, 8) de la seconde moitié (2) de l'accouplement comportant dans la zone des troisièmes ressorts (26) encastrés dans le disque central (12) des découpures en forme de fenêtres (23) qui sont plus grandes d'une quantité correspondante à la zone (b) de l'angle de rotation du second ressort (25) que la découpure en forme de fenêtre (20) pour le troisième ressort (26) dans le disque central (12).

7. Accouplement élastique selon la revendication 6, caractérisé en ce que la largeur des premiers ressorts (24) correspond essentiellement à la largeur libre (17) de l'espace interne (11) dans la seconde moitié (2) de l'accouplement.

8. Accouplement élastique selon la revendication 5, caractérisé en ce que la zone d'action des premiers ressorts (24) se situe entre 0 et 8°, de préférence 5°, la zone d'angle de rotation des seconds ressorts (25) s'étend jusqu'à un angle de rotation de 22°, de préférence 19°, auxquels se raccorde la zone d'angle de rotation des troisièmes ressorts (26) jusqu'à, de préférence 21°, auxquels fait suite, si la rotation continue, une butée fixe.

9. Accouplement élastique selon une des revendications 1 à 8, caractérisé en ce que dans la zone radiale externe de l'espace interne (11) au moins l'appendice (28) est disposé sur la première moitié (1) de l'accouplement, cet appendice constituant pour un angle de rotation maximal, une butée fixe avec un appendice (29) prévu sur la seconde moitié (2) de l'accouplement.

10. Accouplement élastique selon une des revendications 1 à 8, caractérisé en ce qu'il comporte une chambre de refoulement qui est formée par des ouvertures courbées (32) dans le disque médian (6) et le disque central (12), tandis qu'il est prévu une pièce constitutive (33) traversant ces ouvertures (32), l'étendue radiale de cette pièce constitutive (33) étant choisie de façon que des fentes d'étranglement (35) soient ménagées entre les surfaces de parois (34), s'étendant en direction périphérique, des ouvertures (32) et la pièce constitutive (33).

11. Accouplement élastique selon la revendication 10, caractérisé en ce que la courbure des surfaces de parois (34) n'est pas constante en vue d'obtenir une fente d'étranglement (35) variable.

Fig. 1

Fig. 2

Fig. 3

Fig. 4

Fig. 5

Fig. 6

# Fig. 7

# Fig. 8

# Fig. 9